# EUROPEAN PATENT APPLICATION

(11) **EP 4 556 972 A1**
(43) Date of publication of application: **21.05.2025**
(21) Application number: 23839404.3
(22) Date of filing: 15.06.2023
(51) Int. Cl.: G02B 6/36

(54) **OPTICAL CONNECTOR AND PRODUCTION METHOD FOR OPTICAL CONNECTOR**

(30) Priority: 14.07.2022 JP 2022113132
(71) Applicant: SUMITOMO ELECTRIC INDUSTRIES, LTD., Osaka-shi, Osaka 541-0041 (JP)
(72) Inventor: ARAO, Yuki, Osaka-shi, Osaka 541-0041 (JP)
(74) Representative: TBK
(86) International application number: PCT/JP2023/022311
(87) International publication number: WO 2024/014229

(57) **Abstract**

The present invention aims to provide an optical connector capable of reducing damage in an optical fiber and a production method for the optical connector. The optical connector (1) is provided with a fiber member (2), a ferrule (3), and a second protective member (7). The fiber member (2) comprises an optical fiber (21) and a first protective member (22) that is provided to a first region (R1) of the optical fiber, and covers the first region (R1). The ferrule (3) comprises a through hole (31a) through which a second region (R2) of the optical fiber (21) is inserted. The second protective member (7) is provided to a third region (R3) of the optical fiber (21) situated between the ferrule (3) and the first protective member (22). The second protective member (7) covers at least one part of the third region (R3) of the optical fiber (21).

## Description

### TECHNICAL FIELD

The present disclosure relates to an optical connector and a method of manufacturing an optical connector. This application claims priority from Japanese Patent Application No. 2022-113132 filed on July 14, 2022, and the entire contents of the Japanese patent application are incorporated herein by reference.

### BACKGROUND ART

An optical connector including an optical fiber including a glass fiber and a coating covering the glass fiber, and a ferrule is conventionally known (for example, see patent literature 1). In such an optical connector, a portion of the optical fiber is inserted into a through hole of the ferrule.

### CITATION LIST

### PATENT LITERATURE

Patent literature 1: WO 2020/145011

### SUMMARY OF INVENTION

An optical connector according to the present disclosure includes a fiber member including at least one optical fiber and a first protective member provided in a first region of the at least one optical fiber, the first protective member being configured to cover the first region, a ferrule having a through hole into which a second region of the at least one optical fiber is inserted, and a second protective member provided in a third region of the at least one optical fiber, the third region being located between the first protective member and the ferrule. The second protective member is configured to cover at least a portion of the third region of the at least one optical fiber.

A method of manufacturing an optical connector according to the present disclosure includes: preparing a fiber member including an optical fiber and a first protective member configured to cover the optical fiber; removing a portion of the first protective member such that the first protective member remains in a first region of the optical fiber and such that a second region of the optical fiber and a third region of the optical fiber located between the first region and the second region are exposed; inserting the second region of the optical fiber into a through hole of a ferrule; and providing a second protective member on at least a portion of the third region of the optical fiber. In the inserting the second region, the second region of the optical fiber is inserted into the through hole of the ferrule in a state where the third region of the optical fiber is held. In the providing the second protective member, an exposed portion of the third region is covered with the second protective member.

### BRIEF DESCRIPTION OF THE DRAWINGS

FIG. 1 is a cross-sectional view of an optical connector of a first embodiment.
FIG. 2 is a view showing a fiber member, a ferrule, and a second protective member shown in FIG. 1.
FIG. 3 is a perspective view of the second protective member shown in FIG. 1.
FIG. 4 is a view showing a manufacturing step of the optical connector shown in FIG. 1.
FIG. 5 is a view showing a manufacturing step of the optical connector shown in FIG. 1.
FIG. 6 is a view showing a manufacturing step of the optical connector shown in FIG. 1.
FIG. 7 is a view showing a manufacturing step of the optical connector shown in FIG. 1.
FIG. 8 is a view showing a manufacturing step of the optical connector shown in FIG. 1.
FIG. 9 is a view showing a manufacturing step of the optical connector shown in FIG. 1.
FIG. 10 is a view showing a manufacturing step of the optical connector shown in FIG. 1.
FIG. 11 is a view showing a manufacturing step of the optical connector shown in FIG. 1.
FIG. 12 is a cross-sectional view of an optical connector of a second embodiment.
FIG. 13 is a view showing a fiber member, a ferrule and a second protective member shown in FIG. 12.
FIG. 14 is a cross-sectional view taken along line XIV-XIV of FIG. 13.
FIG. 15 is a cross-sectional view taken along line XV-XV of FIG. 13.
FIG. 16 is a perspective view of a holding member of an optical connector according to a modification.
FIG. 17 is a perspective view of a second protective member according to a modification.

### DETAILED DESCRIPTION

### [Problems to be Solved by Present Disclosure]

The optical connector described in patent literature 1 may include a protective member (for example, a cord) that covers a portion of the optical fiber. When the optical fiber is inserted into the through hole of the ferrule, the efficiency of insertion of the optical fiber is improved by holding an exposed portion (coated glass fiber) of the optical fiber exposed from the protective member. Therefore, it is sometimes required to ensure the length of the exposed portion of the optical fiber. However, when the exposed portion of the optical fiber is long, at least a portion of the exposed portion remains exposed to the outside of the optical connector, and as a result, the optical fiber may be easily damaged.

An object of the present disclosure is to provide an optical connector capable of suppressing damage to an optical fiber, and a method of manufacturing the optical connector.

### [Advantageous Effects of Present Disclosure]

According to the present disclosure, it is possible to suppress damage to an optical fiber.

### [Description of Embodiments of Present Disclosure]

First, the contents of embodiments of the present disclosure will be listed and explained.
(1) An optical connector according to the present disclosure includes a fiber member including at least one optical fiber and a first protective member provided in a first region of the at least one optical fiber, the first protective member being configured to cover the first region, a ferrule having a through hole into which a second region of the at least one optical fiber is inserted, and a second protective member provided in a third region of the at least one optical fiber, the third region being located between the first protective member and the ferrule. The second protective member is configured to cover at least a portion of the third region of the at least one optical fiber.
   In this optical connector, the optical fiber includes the third region located between the first region in which the first protective member is provided and the second region inserted into the through hole of the ferrule. Thus, the second region of the optical fiber can be inserted into the through hole of the ferrule in a state where the third region of the optical fiber is held. Thus, the optical fiber can be efficiently inserted into the through hole of the ferrule. Moreover, the optical connector further includes the second protective member provided in the third region of the optical fiber in addition to the first protective member provided in the first region of the optical fiber. This makes it possible to sufficiently ensure the length of the third region for holding the optical fiber and to suppress the exposure of the third region. Thus, according to the optical connector, it is possible to suppress damage to the optical fiber.
(2) In the optical connector according to the above (1), the third region may have a length of 20 mm to 500 mm. Thus, the length of the third region for holding the optical fiber can be appropriately ensured.
(3) In the optical connector according to the above (1) or (2), the at least one optical fiber may be a single optical fiber. The first protective member may be a single first protective member. This can suppress damage to a single optical fiber.
(4) In the optical connector according to the above (1) or (2), the at least one optical fiber may include a plurality of optical fibers. The first protective member may be a single first protective member. The single first protective member may be configured to cover a first region of the plurality of optical fibers. Thus, damage to each of the plurality of optical fibers can be suppressed.
(5) The optical connector according to the above (4) may further include a first fixing member provided in the first region and the third region. The first fixing member may be configured to fix the plurality of optical fibers to each other in an integrated manner in the first region. The first fixing member may be separated for each of the plurality of optical fibers in the third region. Thus, each of the plurality of optical fibers can be inserted into the through hole of the ferrule one by one in a state where the third region of each of the plurality of optical fibers is held.
(6) In the optical connector according to the above (5) may further include a second fixing member provided in the third region. The second fixing member may be configured to fix the plurality of optical fibers to each other in an integrated manner. Thus, after each of the plurality of optical fibers is inserted into the through hole of the ferrule one by one, the third regions of the plurality of optical fibers can be fixed by the second fixing member.
(7) The optical connector according to any one of the above (4) to (6) may further include a holding member disposed in an internal space of the ferrule. The holding member may include a fixing portion configured to fix coated portions of the optical fibers in place and a holding portion configured to hold coating-removed portions of the optical fibers. Thus, the optical fiber can be appropriately held and fixed in the internal space of the ferrule.
(8) In the optical connector according to any one of the above (1) to (7), the second protective member may have elasticity. Thus, the second protective member can be easily provided in the third region of the optical fiber by deforming the second protective member.
(9) In the optical connector according to the above (8), the second protective member may have a tubular shape. The second protective member may extend along an axial direction of the second protective member. Thus, the optical fiber can be appropriately protected.
(10) In the optical connector according to the above (9), the second protective member may have a slit extending along the axial direction of the second protective member and being configured to allow the fiber member to pass through the slit along a direction crossing the axial direction of the second protective member. Thus, the second protective member can be easily provided in the third region of the optical fiber through the slit.
(11) In the optical connector according to any one of the above (1) to (10), the at least one optical fiber may be an alignment fiber. In this case, alignment of the optical fiber with respect to the ferrule can be performed by rotating the optical fiber in a state where the third region of the optical fiber is held. Further, as described above, by sufficiently ensuring the length of the third region, it is possible to suppress the twist of the optical fiber due to the alignment.
(12) A method of manufacturing an optical connector according to the present disclosure includes: preparing a fiber member including an optical fiber and a first protective member configured to cover the optical fiber; removing a portion of the first protective member such that the first protective member remains in a first region of the optical fiber and such that a second region of the optical fiber and a third region of the optical fiber located between the first region and the second region are exposed; inserting the second region of the optical fiber into a through hole of a ferrule; and providing a second protective member on at least a portion of the third region of the optical fiber. In the inserting the second region, the second region of the optical fiber is inserted into the through hole of the ferrule in a state where the third region of the optical fiber is held. In the providing the second protective member, an exposed portion of the third region is covered with the second protective member.
   In the inserting the second region of the method of manufacturing the optical connector, the second region of the optical fiber is inserted into the through hole of the ferrule in a state where the third region of the optical fiber is held. Thus, the optical fiber can be efficiently inserted into the through hole of the ferrule. Moreover, in the providing the second protective member, the exposed portion of the third region is covered with the second protective member. This makes it possible to sufficiently ensure the length of the third region for holding the optical fiber and to suppress the exposure of the third region. Thus, according to the method of manufacturing the optical connector, it is possible to suppress damage to the optical fiber.
(13) In the method of manufacturing an optical connector according to the above (12), in the inserting the second region, alignment of the optical fiber with respect to the ferrule may be performed by rotating the optical fiber in a state where the third region of the optical fiber is held. In this case, as described above, by sufficiently ensuring the length of the third region, it is possible to suppress the twist of the optical fiber due to the alignment.

### [Details of Embodiments of Present Disclosure]

Specific examples of an optical connector and a method of manufacturing an optical connector according to embodiments of the present disclosure will be described with reference to the drawings. The present disclosure is not limited to these examples, but is defined by the scope of the claims, and is intended to include all modifications within the meaning and scope equivalent to the scope of the claims.

### [First Embodiment]

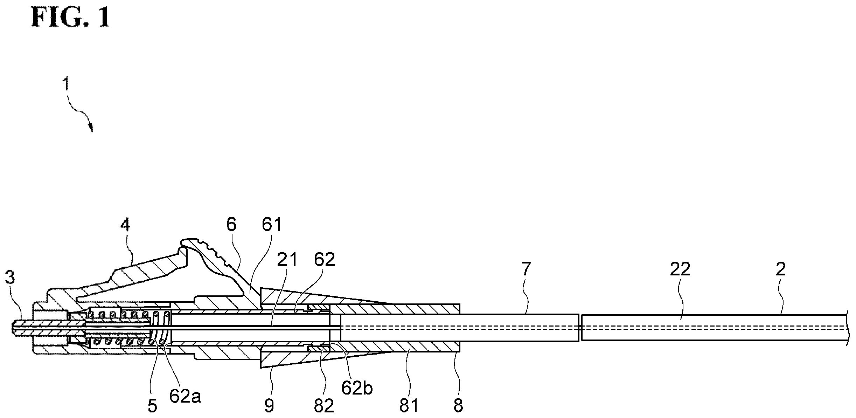

As shown in FIG. 1, an optical connector 1 of a first embodiment includes a fiber member 2, a ferrule 3, a front housing 4, a spring 5, a rear housing 6, a second protective member 7, a fixing member 8, and a boot 9.

Fiber member 2 includes a single optical fiber 21 and a single first protective member 22. That is, optical connector 1 is a single-core connector. Optical fiber 21 includes a glass fiber and a coating. The glass fiber includes, for example, a core and a cladding surrounding the core. The cross section of the glass fiber has a circular shape, for example. The coating covers the glass fiber. A portion of a distal end of the coating is removed from the glass fiber. The coating is, for example, an ultraviolet curable resin or the like. Optical fiber 21 is, for example, an alignment fiber. The alignment fiber is an optical fiber having an axis line, and is an optical fiber whose orientation needs to be aligned in a rotation direction with the axis line as a rotation axis. Optical fiber 21 is, for example, a multicore fiber, a polarization-maintaining fiber, or a fiber bundle.

First protective member 22 covers a portion of optical fiber 21. First protective member 22 covers a portion of optical fiber 21 where the coating is formed. First protective member 22 is, for example, a code or the like for protecting optical fiber 21.

Ferrule 3 is provided in a portion of optical fiber 21 where the coating is removed (distal end portion). Ferrule 3 holds the distal end portion of optical fiber 21. Front housing 4 has an internal space for accommodating ferrule 3. A distal end of ferrule 3 protrudes from a distal end of front housing 4. An inner wall of front housing 4 includes an inclined surface. Ferrule 3 is in contact with the inclined surface. Ferrule 3 is positioned by the inclined surface. Spring 5 is accommodated in front housing 4.

Rear housing 6 includes a first member 61 and a second member 62. A portion of first member 61 is inserted into a rear end portion of front housing 4. First member 61 is fixed to front housing 4. First member 61 has an internal space that communicates with the internal space of front housing 4. Second member 62 has, for example, a cylindrical shape. A portion of second member 62 is inserted into a rear end portion of first member 61. A distal end 62a of second member 62 is located in the internal space of first member 61. A rear end 62b of second member 62 is located outside first member 61. Second member 62 is fixed to first member 61.

Spring 5 is pressed between second member 62 and ferrule 3. Thus, spring 5 applies an elastic force to ferrule 3. Ferrule 3 is pressed against the inclined surface of front housing 4 by the elastic force of spring 5.

Second protective member 7 is located between second member 62 and first protective member 22 of fiber member 2. Second protective member 7 covers a portion of optical fiber 21. Second protective member 7 has, for example, a tubular shape (cylindrical shape). Second protective member 7 is, for example, a cord or the like for protecting optical fiber 21. The outer diameter of second protective member 7 is the same as the outer diameter of first protective member 22. The material of second protective member 7 is the same as the material of first protective member 22.

Fixing member 8 includes a retaining member 81 and a crimping member 82. Retaining member 81 has, for example, a cylindrical shape. Retaining member 81 has, for example, heat shrinkability. Retaining member 81 shrinks when heated. Retaining member 81 is disposed outside second protective member 7. Retaining member 81 retains second protective member 7 toward the inside in the radial direction of second protective member 7.

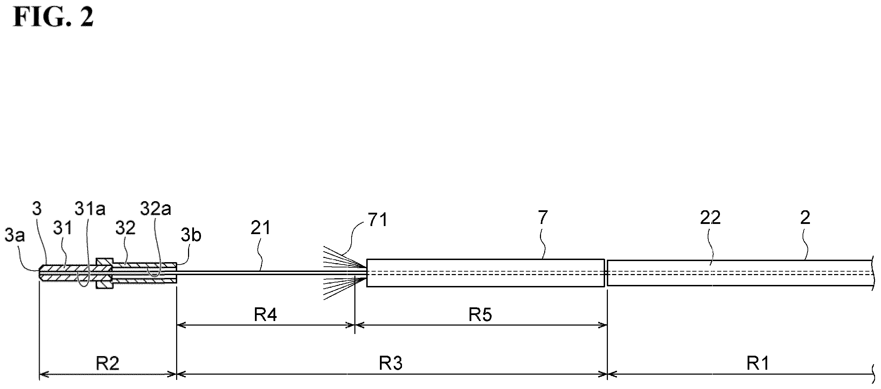

Crimping member 82 has, for example, a cylindrical shape. The material of crimping member 82 is, for example, metal. Crimping member 82 is fixed to retaining member 81. Crimping member 82 is fixed to second member 62 by crimping in a state where a tensile resistant fiber 71 provided inside second protective member 7 (see FIG. 2) is interposed between crimping member 82 and second member 62 of rear housing 6. In this way, second protective member 7 is fixed to rear housing 6 by fixing member 8. A portion of second protective member 7 on the side opposite to rear housing 6 is exposed from retaining member 81.

Boot 9 is disposed outside rear housing 6 and fixing member 8. Boot 9 is provided across rear housing 6 and fixing member 8. Boot 9 protects rear housing 6 and fixing member 8. A portion of fixing member 8 on the side opposite to rear housing 6 is exposed from boot 9.

FIG. 2 is a view showing fiber member 2, ferrule 3, and second protective member 7. FIG. 2 is a view showing a portion of optical connector 1 shown in FIG. 1, excluding front housing 4, spring 5, rear housing 6, fixing member 8, and boot 9. As shown in FIG. 2, ferrule 3 has a ferrule portion 31 and a flange portion 32. Ferrule portion 31 has, for example, a columnar shape. Ferrule portion 31 has a through hole 31a. The distal end portion (a portion where the coating is removed) of optical fiber 21 is inserted into through hole 31a.

Flange portion 32 has, for example, a cylindrical shape having a flange. A portion of ferrule portion 31 is inserted into flange portion 32. Flange portion 32 is fixed to ferrule portion 31. An internal space 32a of flange portion 32 communicates with through hole 31a of ferrule portion 31. Ferrule 3 includes a distal end 3a and a rear end 3b on the the side opposite to distal end 3a. Distal end 3a is a distal end of ferrule portion 31, and rear end 3b is a rear end of flange portion 32. The distal end of optical fiber 21 coincides with distal end 3a. The term "coincide" used herein means "substantially coincide" within the range of tolerance. That is, the distal end of optical fiber 21 may completely coincide with distal end 3a, or may substantially coincide with distal end 3a within the range of tolerance.

Optical fiber 21 includes a first region R1, a second region R2, and a third region R3. First region R1 is a region of optical fiber 21 where first protective member 22 is provided. That is, first region R1 is defined by first protective member 22. First protective member 22 covers first region R1. Second region R2 is a region of optical fiber 21 where ferrule 3 is provided. That is, second region R2 is defined by ferrule 3. Second region R2 is a region of optical fiber 21 between distal end 3a and rear end 3b of ferrule 3. A portion of second region R2 is inserted into through hole 31a as the distal end portion of optical fiber 21. Second region R2 is separated from first region R1.

Third region R3 is a region of optical fiber 21 located between first protective member 22 and ferrule 3. That is, third region R3 is a region of optical fiber 21 between first region R1 and second region R2. The length of third region R3 is larger than the length of second region R2 (the distance between distal end 3a and rear end 3b of ferrule 3). The length of third region R3 is, for example, 20 mm to 500 mm. The length of third region R3 is, for example, 100 mm to 500 mm. The length of third region R3 is, for example, 200 mm to 500 mm. When the length of third region R3 is short, a connection portion (boundary) between second protective member 7 and first protective member 22 is disposed in the vicinity of rear end 62b of second member 62, and bending or force is easily applied during handling, and thus, there is a problem in strength. On the other hand, when the length of third region R3 is long, there is a problem that it is difficult to insert or install second protective member 7, making handling difficult.

Second protective member 7 covers at least a portion of third region R3. Specifically, third region R3 includes a fourth region R4 and a fifth region R5. Fourth region R4 is a region of optical fiber 21 between rear end 3b of ferrule 3 and rear end 62b of second member 62 of rear housing 6 (see FIG. 1). Fifth region R5 is a region of optical fiber 21 between rear end 62b of second member 62 and first protective member 22. That is, fifth region R5 is a region of optical fiber 21 between fourth region R4 and first region R1. The length of fifth region R5 is larger than the length of fourth region R4. The length of fifth region R5 is, for example, 10 mm to 490 mm.

Second protective member 7 is provided in fifth region R5. Second protective member 7 covers fifth region R5. Second protective member 7 is fixed to first protective member 22 by, for example, crimping or adhesion. The length of second protective member 7 is slightly smaller than the length of fifth region R5. The length of second protective member 7 may be identical to the length of fifth region R5. The term "identical" used herein means "substantially identical" within the range of tolerance. That is, the length of second protective member 7 may be completely identical to the length of fifth region R5, or may be substantially identical to the length of fifth region R5 within the range of tolerance. The length of second protective member 7 may be larger than the length of fifth region R5. The length of second protective member 7 is larger than the length of fourth region R4. The length of second protective member 7 is, for example, 10 mm to 490 mm.

A plurality of tensile resistant fibers 71 are provided inside second protective member 7. A portion of tensile resistant fiber 71 is exposed from second protective member 7. Tensile resistant fiber 71 is fixed to second protective member 7. The plurality of tensile resistant fibers 71 may be integrated by, for example, a tape or the like. That is, the plurality of tensile resistant fibers 71 may be fixed to each other in an integrated manner. Specifically, at least a portion of the region in the extending direction of tensile resistant fiber 71 among the plurality of tensile resistant fibers 71 may be fixed by a tape. This suppresses separation of the adjacent tensile resistant fibers 71.

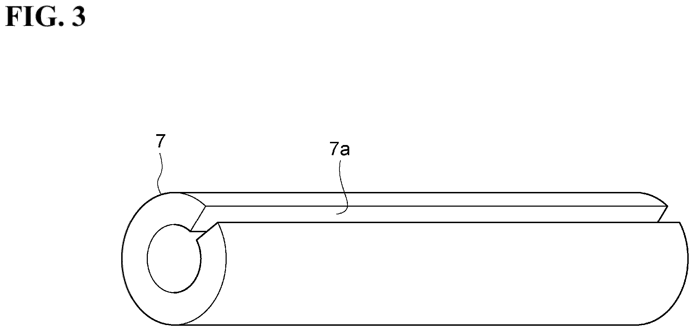

As shown in FIG. 3, second protective member 7 has a slit 7a. Slit 7a extends along an axial direction of second protective member 7. Slit 7a reaches both ends of second protective member 7 in the axial direction. That is, the length of slit 7a is the same as the length of second protective member 7. Second protective member 7 has elasticity. The material of second protective member 7 is, for example, resin or the like. A width of slit 7a may be varied by the deformation of second protective member 7. Fiber member 2 can pass through slit 7a along a direction crossing the axial direction of second protective member 7 in a state where the axis line of optical fiber 21 and the axis line of second protective member 7 are parallel to each other. The term "parallel" used herein means "substantially parallel" within the range of tolerance. That is, fiber member 2 may be able to pass through slit 7a along the direction crossing the axial direction of second protective member 7 in a state where the axis line of optical fiber 21 and the axis line of second protective member 7 are completely parallel, or may be able to pass through slit 7a along the direction crossing the axial direction of second protective member 7 in a state where the axis line of optical fiber 21 and the axis line of second protective member 7 are substantially parallel. Fiber member 2 can move into second protective member 7 through slit 7a when the width of slit 7a increases as a result of the deformation of second protective member 7.

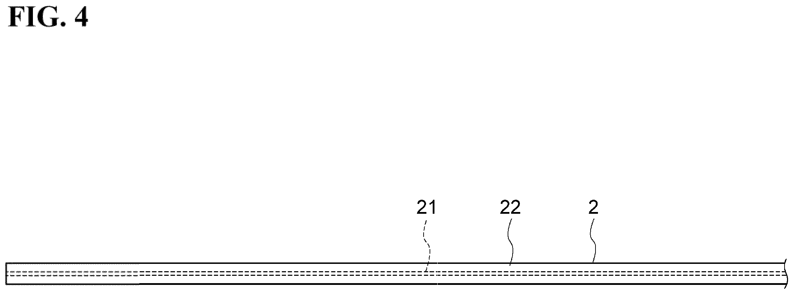

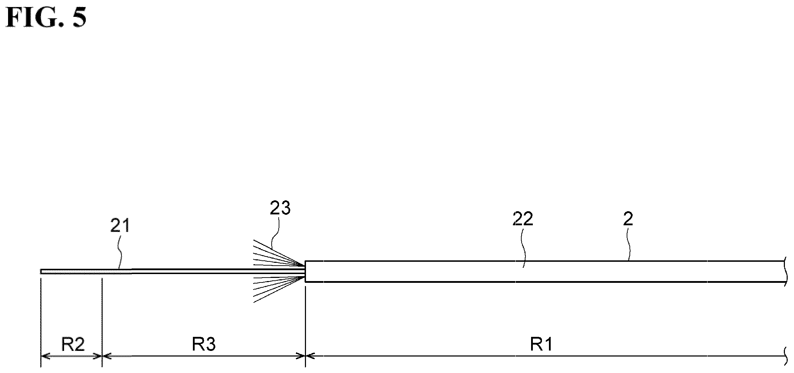

Next, a method of manufacturing optical connector 1 will be described. First, as shown in FIG. 4, fiber member 2 is prepared (first step). At this time, first protective member 22 of fiber member 2 covers the entire optical fiber 21. Subsequently, as shown in FIG. 5, a portion of first protective member 22 is removed such that first protective member 22 remains in first region R1 of optical fiber 21 (second step). As a result, second region R2 and third region R3 of optical fiber 21 are exposed from first protective member 22. Note that, similarly to second protective member 7, a plurality of tensile resistant fibers 23 are provided inside first protective member 22. When a portion of first protective member 22 is removed, a portion of tensile resistant fiber 23 is exposed from first protective member 22. Subsequently, the portion of the exposed tensile resistant fiber 23 is cut. Tensile resistant fiber 23 may extend to third region R3 or second region R2. That is, the length of the portion of tensile resistant fiber 23 exposed from first protective member 22 may be smaller or larger than the length of third region R3.

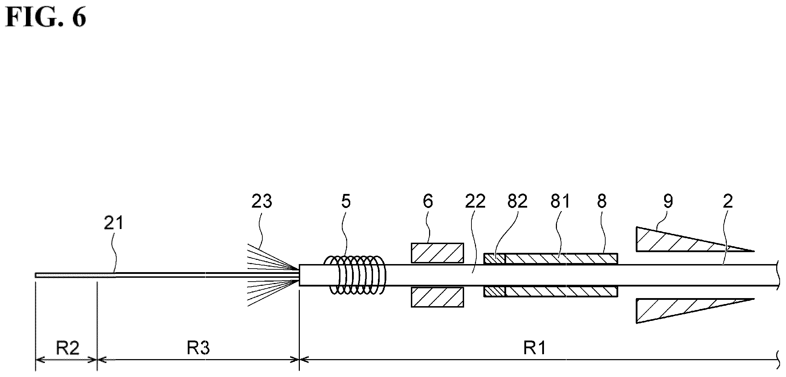

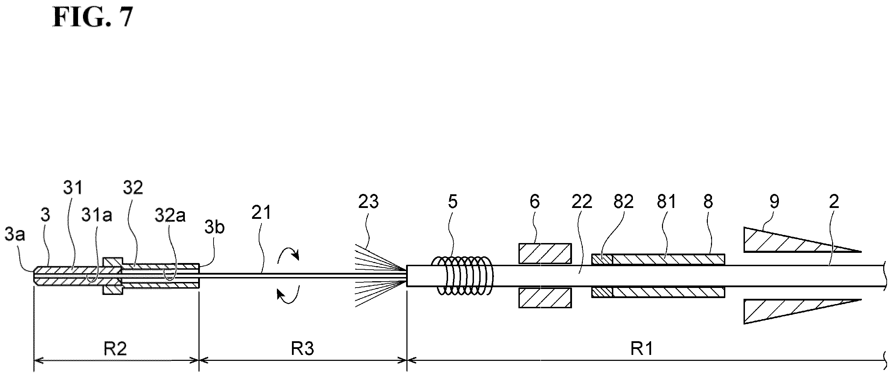

Subsequently, a portion of the distal end of the coating of optical fiber 21 is removed. Specifically, the coating formed on the portion of optical fiber 21 to be inserted into through hole 31a of ferrule 3 is removed. Thus, the distal end portion of optical fiber 21 is formed. Subsequently, as shown in FIG. 6, each of spring 5, rear housing 6, fixing member 8, and boot 9 is disposed outside first protective member 22 of fiber member 2. Subsequently, as shown in FIG. 7, second region R2 of optical fiber 21 is inserted into through hole 31a of ferrule 3 (third step). Specifically, a portion of second region R2 of optical fiber 21 (the distal end portion of optical fiber 21) is inserted into through hole 31a, and another portion of second region R2 of optical fiber 21 is disposed in internal space 32a of flange portion 32.

In the third step, the portion of second region R2 of optical fiber 21 is inserted into through hole 31a of ferrule 3 in a state where third region R3 of optical fiber 21 is held. Third region R3 is held by the hand of the worker or a jig. Subsequently, optical fiber 21 is rotated in a state where third region R3 of optical fiber 21 is held (third step). Thus, alignment of optical fiber 21 with respect to ferrule 3 is performed. In the third step, optical fiber 21 is rotated in a state where first protective member 22 and ferrule 3 are fixed. Since optical fiber 21 receives resistance from first protective member 22, when optical fiber 21 is rotated in a state where first protective member 22 is fixed, optical fiber 21 is twisted. Subsequently, optical fiber 21 is fixed to ferrule 3 with, for example, an adhesive. Subsequently, ferrule 3 and optical fiber 21 are subjected to end face processing. In FIGS. 6 and 7, rear housing 6 and the like are shown in a simplified manner.

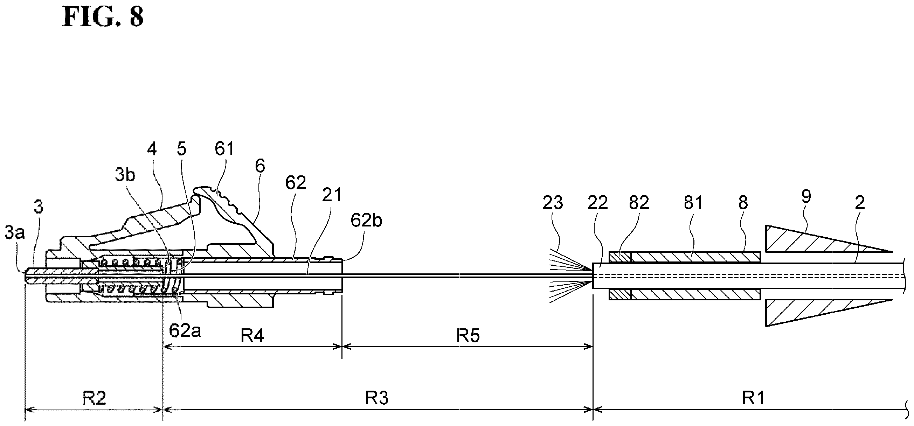

Subsequently, as shown in FIG. 8, front housing 4 is disposed outside ferrule 3. Subsequently, spring 5 is disposed in the internal space of front housing 4. Subsequently, first member 61 of rear housing 6 is inserted into front housing 4. Thus, rear housing 6 is fixed to front housing 4. Fourth region R4 of third region R3 of optical fiber 21 is disposed in the internal space of rear housing 6. That is, fifth region R5 of third region R3 is exposed to the outside.

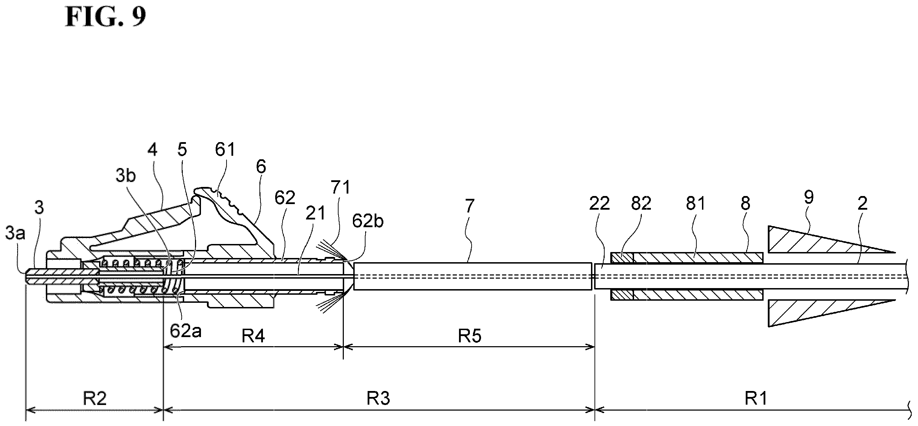

Subsequently, as shown in FIG. 9, second protective member 7 is provided on at least a portion of third region R3 of optical fiber 21 (fourth step). Specifically, second protective member 7 is provided on fifth region R5 of third region R3. That is, in the fourth step, the exposed portion of third region R3 is covered with second protective member 7. In the fourth step, fifth region R5 is disposed inside second protective member 7 through slit 7a in a state in which slit 7a (see FIG. 3) of second protective member 7 is expanded. When fifth region R5 is disposed inside second protective member 7, the width of slit 7a is reduced and slit 7a returns to the original state. Tensile resistant fibers 71 provided inside second protective member 7 are disposed outside second member 62 of rear housing 6. Tensile resistant fibers 23 (see FIG. 8) may also be disposed outside second member 62 of rear housing 6.

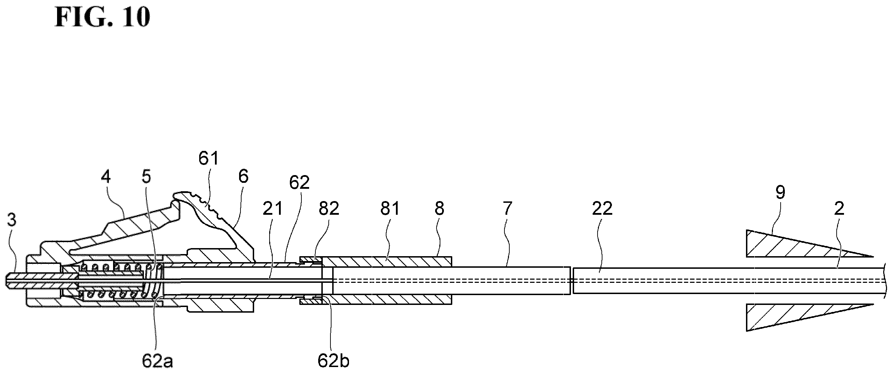

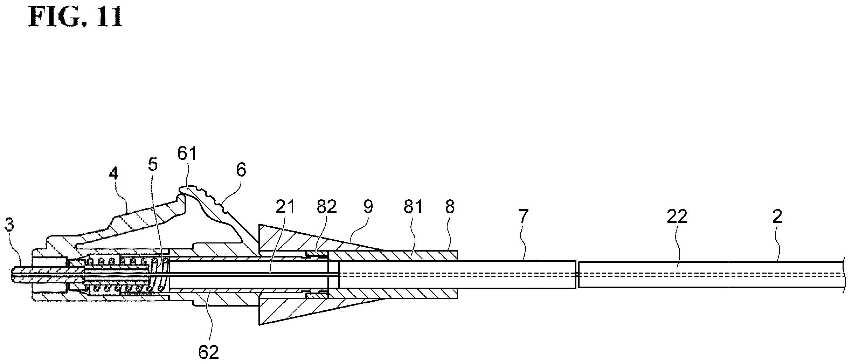

Subsequently, as shown in FIG. 10, crimping member 82 of fixing member 8 is fixed to second member 62 by crimping in a state where tensile resistant fibers 71 (see FIG. 9) and tensile resistant fibers 23 (see FIG. 8) are interposed between crimping member 82 and second member 62. Subsequently, retaining member 81 of fixing member 8 is heated. As a result, retaining member 81 shrinks, and second protective member 7 is retained by retaining member 81. Subsequently, as shown in FIG. 11, boot 9 is disposed outside rear housing 6 and fixing member 8. Subsequently, second protective member 7 is fixed to first protective member 22 by, for example, crimping or bonding. In this way, optical connector 1 is manufactured.

As described above, in optical connector 1, optical fiber 21 includes third region R3 located between first region R1 in which first protective member 22 is provided and second region R2 which is inserted into through hole 31a of ferrule 3. Thus, second region R2 of optical fiber 21 can be inserted into through hole 31a of ferrule 3 in a state where third region R3 of optical fiber 21 is held. Thus, optical fiber 21 can be efficiently inserted into through hole 31a of ferrule 3. Moreover, optical connector 1 further includes second protective member 7 provided in third region R3 of optical fiber 21 in addition to first protective member 22 provided in first region R1 of optical fiber 21. This makes it possible to sufficiently ensure the length of third region R3 for holding optical fiber 21 and to suppress the exposure of third region R3. Thus, according to optical connector 1, it is possible to suppress damage to optical fiber 21.

Third region R3 has a length of 20 mm to 500 mm. Thus, the length of third region R3 for holding optical fiber 21 can be appropriately ensured.

Fiber member 2 includes single optical fiber 21 and single first protective member 22. This can suppress damage to single optical fiber 21.

Second protective member 7 has elasticity. Thus, second protective member 7 can be easily provided in third region R3 of optical fiber 21 by deforming second protective member 7.

Second protective member 7 has a cylindrical shape. Second protective member 7 extends along the axial direction of second protective member 7. Thus, optical fiber 21 can be appropriately protected.

Second protective member 7 has slit 7a. Slit 7a extends along the axial direction of second protective member 7. Fiber member 2 can pass through slit 7a along a direction intersecting the axial direction of second protective member 7. Thus, second protective member 7 can be easily provided in third region R3 of optical fiber 21 through slit 7a.

Optical fiber 21 is an alignment fiber. Accordingly, alignment of optical fiber 21 with respect to ferrule 3 can be performed by rotating optical fiber 21 in a state where third region R3 of optical fiber 21 is held. Further, as described above, by sufficiently ensuring the length of third region R3, it is possible to suppress the twist of optical fiber 21 due to the alignment.

In the third step of the method of manufacturing optical connector 1, second region R2 of optical fiber 21 is inserted into through hole 31a of ferrule 3 in a state where third region R3 of optical fiber 21 is held. Thus, optical fiber 21 can be efficiently inserted into through hole 31a of ferrule 3. Moreover, in the fourth step, the exposed portion of third region R3 is covered with second protective member 7. This makes it possible to sufficiently ensure the length of third region R3 for holding optical fiber 21 and to suppress the exposure of third region R3. Thus, according to the method of manufacturing optical connector 1, it is possible to suppress damage to optical fiber 21.

In the third step, optical fiber 21 is rotated in a state where third region R3 of optical fiber 21 is held. Thus, alignment of optical fiber 21 with respect to ferrule 3 is performed. Thus, as described above, by sufficiently ensuring the length of third region R3, it is possible to suppress the twist of optical fiber 21 due to the alignment.

### [Second Embodiment]

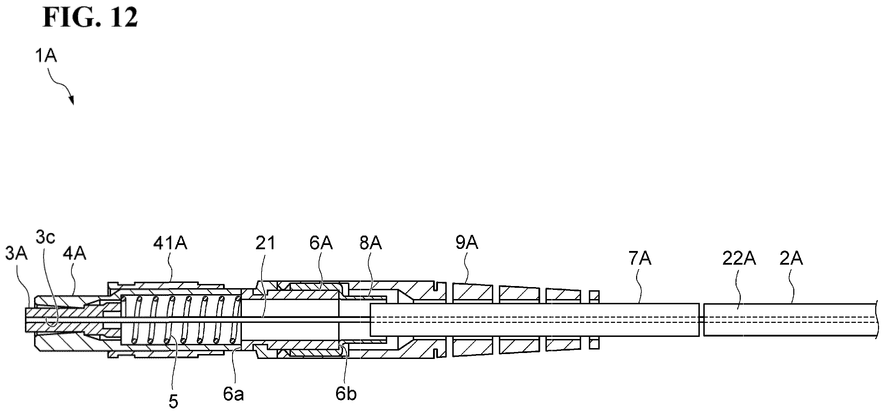

FIG. 12 is a cross-sectional view of an optical connector 1A according to a second embodiment. Optical connector 1A of the second embodiment includes a fiber member 2A, a ferrule 3A, a front housing 4A, spring 5, an outer housing 41A, a rear housing 6A, a second protective member 7A, a fixing member 8A, and a boot 9A. Hereinafter, optical connector 1A of the second embodiment will be described in terms of the parts different from optical connector 1 of the first embodiment, and the description of the same structure as optical connector 1 of the first embodiment will be omitted.

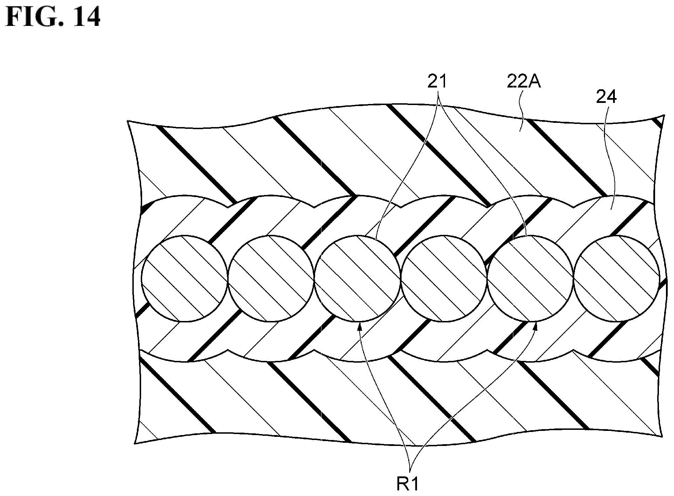

Fiber member 2A includes a plurality of optical fibers 21 and a single first protective member 22A (see FIG. 14). Ferrule 3A has a plurality of through holes 3c. Front housing 4A accommodates ferrule 3A and spring 5. Outer housing 41A is disposed outside front housing 4A. Rear housing 6A has, for example, a rectangular tubular shape. A portion of rear housing 6A is inserted into front housing 4A. A distal end 6a of rear housing 6A is located in an internal space of front housing 4. A rear end 6b of rear housing 6A is located outside front housing 4. Rear housing 6A is fixed to front housing 4A. Rear housing 6A is engaged with front housing 4A.

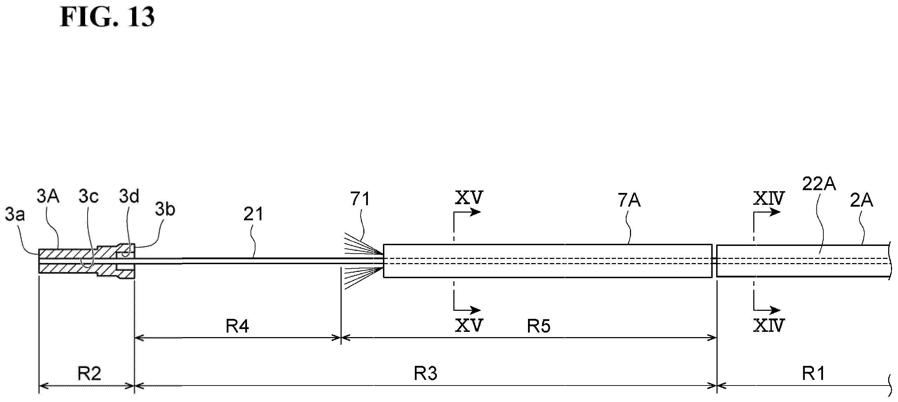

Fixing member 8A has, for example, a cylindrical shape. The material of fixing member 8A is, for example, metal. Fixing member 8A is fixed to rear housing 6A by crimping in a state where tensile resistant fiber 71 provided inside second protective member 7A (see FIG. 13) is interposed between fixing member 8A and rear housing 6A. Boot 9A is disposed outside rear housing 6A, fixing member 8A, and second protective member 7A. Boot 9A protects rear housing 6A, fixing member 8A, and second protective member 7A. A portion of second protective member 7A on the side opposite to rear housing 6A is exposed from boot 9A.

As shown in FIG. 13, ferrule 3A has through hole 3c. Ferrule 3A has a plurality of through holes 3c. The plurality of through holes 3c are arranged in a line in a direction crossing the axial direction of through holes 3c. A distal end portion of each optical fiber 21 is inserted into each through hole 3c. Ferrule 3A has an internal space 3d communicating with each through hole 3c. The plurality of through holes 3c are located on distal end 3a side of ferrule 3A. Internal space 3d is located on rear end 3b side of ferrule 3A.

The length of third region R3 of optical fiber 21 is larger than the length of ferrule 3A (the distance between distal end 3a and rear end 3b). Fourth region R4 of optical fiber 21 is a region of optical fiber 21 between rear end 3b of ferrule 3A and rear end 6b of rear housing 6A (see FIG. 12). Fifth region R5 of optical fiber 21 is a region of optical fiber 21 between rear end 6b of rear housing 6A and first protective member 22.

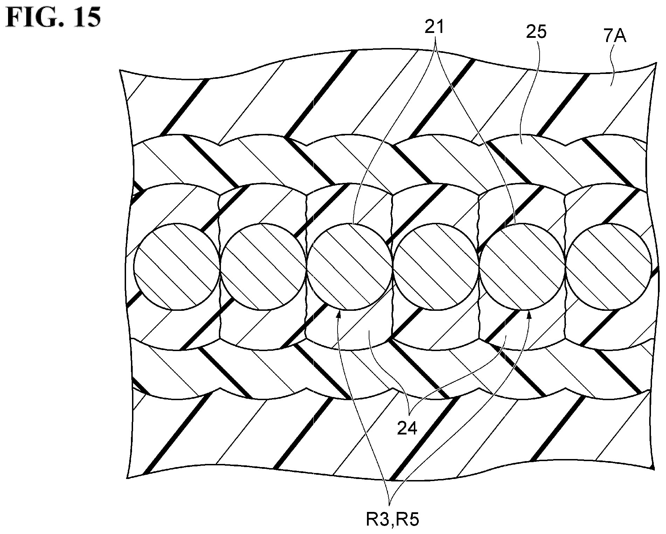

As shown in FIGS. 14 and 15, fiber member 2A includes a plurality of optical fibers 21, single first protective member 22A, a first fixing member 24, and a second fixing member 25. The plurality of optical fibers 21 are arranged in a line in a direction crossing an axial direction of optical fibers 21. First protective member 22A is provided outside first regions R1 of the plurality of optical fibers 21. First protective member 22A covers first regions R1 of the plurality of optical fibers 21. Second protective member 7A is provided outside fifth regions R5 of the plurality of optical fibers 21. Second protective member 7A covers fifth regions R5 of the plurality of optical fibers 21.

First fixing member 24 is provided outside first regions R1 and third regions R3 of the plurality of optical fibers 21. First fixing member 24 covers first regions R1 and third regions R3 of the plurality of optical fibers 21. First fixing member 24 is provided inside first protective member 22A in first regions R1. First fixing member 24 is provided inside second protective member 7A in fifth regions R5. First fixing member 24 is, for example, an adhesive or the like.

First fixing member 24 is formed integrally with the plurality of optical fibers 21 in first regions R1. In other words, first fixing member 24 fixes the plurality of optical fibers 21 to each other in an integrated manner in first regions R1. First fixing member 24 is contiguously connected across optical fibers 21 in first regions R1. Thus, the plurality of optical fibers 21 are fixed by first fixing member 24 in first regions R1.

First fixing member 24 is formed separately for each of the plurality of optical fibers 21 in third region R3. In other words, first fixing member 24 is separated for each of the plurality of optical fibers 21 in third region R3. That is, first fixing member 24 is provided for each optical fiber 21 in third region R3. First fixing members 24 provided in third region R3 of each optical fiber 21 are separated from each other. The plurality of optical fibers 21 are not fixed to each other by first fixing member 24 in third region R3. First fixing member 24 provided in third region R3 of each optical fiber 21 is separated for each optical fiber 21 from a state in which first fixing member 24 is formed integrally with the plurality of optical fibers 21.

Second fixing member 25 is provided outside third regions R3 of the plurality of optical fibers 21. Second fixing member 25 covers third regions R3 of the plurality of optical fibers 21. Second fixing member 25 is provided outside first fixing member 24. Second fixing member 25 covers first fixing member 24. Second fixing member 25 is provided inside second protective member 7A in fifth regions R5. Second fixing member 25 is, for example, an adhesive or the like.

Second fixing member 25 is formed integrally with the plurality of optical fibers 21. That is, second fixing member 25 is contiguously connected across optical fibers 21. Second fixing member 25 fixes the plurality of optical fibers 21 to each other in an integrated manner. Thus, the plurality of optical fibers 21 are fixed by second fixing member 25 in third regions R3. In FIGS. 12 and 13, first fixing member 24 and second fixing member 25 are not shown.

Next, a method of manufacturing optical connector 1A will be described in terms of differences from the method of manufacturing optical connector 1. In the method of manufacturing optical connector 1A, when a portion of first protective member 22A is removed such that first protective member 22A remains in first regions R1 of the plurality of optical fibers 21, second regions R2 and third regions R3 of the plurality of optical fibers 21 are exposed from first protective member 22A in a state of being covered with first fixing member 24.

In the method of manufacturing optical connector 1A, first fixing member 24 is separated for each optical fiber 21 from a state in which first fixing member 24 is formed integrally with the plurality of optical fibers 21 in second regions R2 and third regions R3 of the plurality of optical fibers 21. In the method of manufacturing optical connector 1A, third region R3 of each optical fiber 21 is held in a state of being covered with first fixing member 24.

In the method of manufacturing optical connector 1A, after each optical fiber 21 is inserted into through holes 3c of ferrule 3A, fifth regions R5 of the plurality of optical fibers 21 is fixed to each other by second fixing member 25. In the method of manufacturing optical connector 1A, fifth regions 5a of the plurality of optical fibers 21 is disposed inside second protective member 7A through slit 7a in a state where fifth regions 5a of the plurality of optical fibers 21 is fixed by second fixing member 25.

As described above, fiber member 2A includes the plurality of optical fibers 21 and single first protective member 22A. First protective member 22A covers first regions R1 of the plurality of optical fibers 21. Thus, damage to each of the plurality of optical fibers 21 can be suppressed.

Optical connector 1A includes first fixing members 24 provided in first region R1 and third region R3. First fixing member 24 fixes the plurality of optical fibers 21 to each other in an integrated manner in first region R1. First fixing member 24 is separated for each of the plurality of optical fibers 21 in third region R3. Thus, each optical fiber 21 can be inserted into through hole 3c of ferrule 3A one by one in a state where third region R3 of each optical fiber 21 is held.

Optical connector 1A includes second fixing member 25 provided in third region R3. Second fixing member 25 fixes the plurality of optical fibers 21 to each other in an integrated manner. Thus, after each optical fiber 21 is inserted into through holes 3c of ferrule 3A one by one, third regions R3 of the plurality of optical fibers 21 can be fixed by second fixing member 25.

### [Modification]

Although one embodiment of the present disclosure has been described above, the present disclosure is not limited to the above-described embodiment.

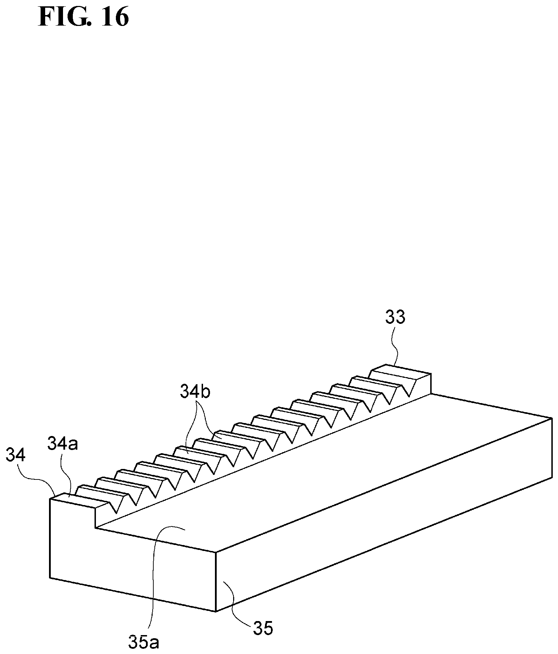

As shown in FIG. 16, optical connector 1A may further include a holding member 33. Holding member 33 is disposed in internal space 3d of ferrule 3A. Holding member 33 includes a holding portion 34 and a fixing portion 35. Holding portion 34 includes a surface 34a. A plurality of grooves 34b are formed on surface 34a. The plurality of grooves 34b hold the distal end portions (coating-removed portions) of optical fiber 21. Groove 34b defines the position of optical fiber 21 in the radial direction. Holding portion 34 may have a plurality of through holes instead of the plurality of grooves 34b.

Fixing portion 35 is integrally formed with holding portion 34. That is, fixing portion 35 is formed as one piece with holding portion 34. Fixing portion 35 includes a surface 35a. Surface 35a is parallel to surface 34a of holding portion 34. Surface 35a is located on a plane different from surface 34a. Surface 35a is positioned on groove 34b side with respect to surface 34a. A portion of second region R2 of optical fiber 21 where the coating remains (coated portion) is disposed on surface 35a. The coated portion of optical fiber 21 is fixed to surface 35a. Thus, optical fiber 21 can be appropriately held and fixed in internal space 3d of ferrule 3A. Further, the bending of optical fiber 21 can be suppressed by disposing the coating-removed portion of optical fiber 21 in groove 34b and disposing the coated portion having a larger outer diameter than the coating-removed portion in surface 35a.

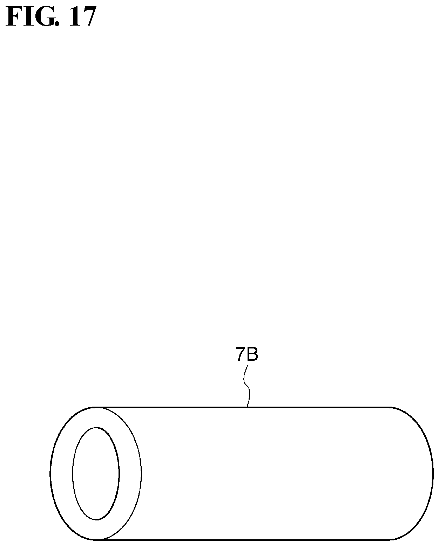

As shown in FIG. 17, optical connectors 1 and 1A may include a second protective member 7B instead of second protective members 7 and 7A. Second protective member 7B has, for example, a cylindrical shape. Second protective member 7B does not have a slit. Second protective member 7B is contiguously connected in the circumferential direction. Second protective member 7B has elasticity. Second protective member 7B has an elasticity coefficient smaller than that of second protective members 7 and 7A. That is, second protective member 7B is more easily deformed than second protective members 7 and 7A. Second protective member 7B is disposed outside fiber members 2 and 2A along the axial direction of optical fiber 21 in an expanded state. Second protective member 7, 7A may have a spiral shape. Second protective members 7 and 7A may be spiral tubes. Second protective members 7 and 7A may cover at least a portion of third region R3 of optical fiber 21.

In the first embodiment, an example in which second protective member 7 is fixed to first protective member 22 by crimping or adhesion is shown, but second protective member 7 may be fixed to first protective member 22 by retaining member 81 of fixing member 8 extending to first protective member 22 across second protective member 7 and first protective member 22.

In the first embodiment, an example in which tensile resistant fiber 23 is disposed outside second member 62 of rear housing 6 and tensile resistant fiber 23 is fixed to second member 62 by crimping in a state where tensile resistant fiber 23 is interposed between crimping member 82 and second member 62 is shown, but tensile resistant fiber 23 does not have to be disposed outside second member 62. Tensile resistant fiber 23 does not have to be fixed to second member 62 by crimping.

In the second embodiment, an example in which first fixing member 24 is provided in third region R3 is shown, but first fixing member 24 does not have to be provided in third region R3. First fixing member 24 may be removed from third region R3. In the method of manufacturing optical connector 1A, third region R3 of each optical fiber 21 may be held in a state where first fixing member 24 is removed.

In each embodiment, an example in which the length of third region R3 is larger than the length of second region R2 is shown, but the length of third region R3 may be equal to or smaller than the length of second region R2. In each embodiment, an example in which the length of fifth region R5 is larger than the length of fourth region R4 is shown, but the length of fifth region R5 may be equal to or smaller than the length of fourth region R4. In each embodiment, an example in which the length of second protective member 7 is larger than the length of fourth region R4 is shown, but the length of second protective member 7 may be equal to or smaller than the length of fourth region R4.

In each embodiment, an example in which the plurality of tensile resistant fibers 71 are provided inside second protective members 7 and 7A is shown, but tensile resistant fibers 71 do not have to be provided inside second protective members 7 and 7A. In each embodiment, an example in which the plurality of tensile resistant fibers 23 are provided inside first protective member 22, 22A is shown, but tensile resistant fibers 23 do not have to be provided inside first protective members 22 and 22A.

### REFERENCE SIGNS LIST

1, 1A optical connector
2, 2A fiber member
3, 3A ferrule
4, 4A front housing
5 spring
6, 6A rear housing
7, 7A, 7B second protective member
8, 8A fixing member
9, 9A boot
21 optical fiber
22, 22A first protective member
23 tensile resistant fiber
24 first fixing member
25 second fixing member
3a distal end
3b rear end
3c through hole
3d internal space
31 ferrule portion
31a through hole
32 flange portion
32a internal space
33 holding member
34 holding portion
34a surface
34b groove
35 fixing portion
35a surface
41A outer housing
6a distal end
6b rear end
61 first member
62 second member
62a distal end
62b rear end
7a slit
71 tensile resistant fiber
81 retaining member
82 crimping member
R1 first region
R2 second region
R3 third region
R4 fourth region
R5 fifth region

## Claims

1. An optical connector comprising:
a fiber member including at least one optical fiber and a first protective member provided in a first region of the at least one optical fiber, the first protective member being configured to cover the first region;
a ferrule having a through hole into which a second region of the at least one optical fiber is inserted; and
a second protective member provided in a third region of the at least one optical fiber, the third region being located between the first protective member and the ferrule,
wherein the second protective member is configured to cover at least a portion of the third region of the at least one optical fiber.

2. The optical connector according to claim 1,
wherein the third region has a length of 20 mm to 500 mm.

3. The optical connector according to claim 1 or claim 2,
wherein the at least one optical fiber is a single optical fiber, and
wherein the first protective member is a single first protective member.

4. The optical connector according to claim 1 or claim 2,
wherein the at least one optical fiber includes a plurality of optical fibers,
wherein the first protective member is a single first protective member, and
wherein the single first protective member is configured to cover a first region of the plurality of optical fibers.

5. The optical connector according to claim 4, further comprising:
a first fixing member provided in the first region and the third region,
wherein the first fixing member is configured to fix the plurality of optical fibers to each other in an integrated manner in the first region, and
wherein the first fixing member is separated for each of the plurality of optical fibers in the third region.

6. The optical connector according to claim 5, further comprising:
a second fixing member provided in the third region,
wherein the second fixing member is configured to fix the plurality of optical fibers to each other in an integrated manner.

7. The optical connector according to any one of claim 4 to claim 6, further comprising:
a holding member disposed in an internal space of the ferrule,
wherein the holding member includes a fixing portion configured to fix coated portions of the optical fibers in place and a holding portion configured to hold coating-removed portions of the optical fibers.

8. The optical connector according to any one of claim 1 to claim 7,
wherein the second protective member has elasticity.

9. The optical connector according to claim 8,
wherein the second protective member has a tubular shape, and
wherein the second protective member extends along an axial direction of the second protective member.

10. The optical connector according to claim 9,
wherein the second protective member has a slit extending along the axial direction of the second protective member and being configured to allow the fiber member to pass through the slit along a direction crossing the axial direction of the second protective member.

11. The optical connector according to any one of claim 1 to claim 10,
wherein the at least one optical fiber is an alignment fiber.

12. A method of manufacturing an optical connector, the method comprising:
preparing a fiber member including an optical fiber and a first protective member configured to cover the optical fiber;
removing a portion of the first protective member such that the first protective member remains in a first region of the optical fiber and such that a second region of the optical fiber and a third region of the optical fiber located between the first region and the second region are exposed;
inserting the second region of the optical fiber into a through hole of a ferrule; and
providing a second protective member on at least a portion of the third region of the optical fiber,
wherein, in the inserting the second region, the second region of the optical fiber is inserted into the through hole of the ferrule in a state where the third region of the optical fiber is held, and
wherein, in the providing the second protective member, an exposed portion of the third region is covered with the second protective member.

13. The method of manufacturing an optical connector according to claim 12,
wherein, in the inserting the second region, alignment of the optical fiber with respect to the ferrule is performed by rotating the optical fiber in a state where the third region of the optical fiber is held.
